# EUROPEAN PATENT APPLICATION

(11) **EP 2 453 659 A2**
(43) Date of publication of application: **16.05.2012**
(21) Application number: 10797330.7
(22) Date of filing: 09.07.2010
(51) Int. Cl.: H04N 13/00, H04N 13/04

(54) **IMAGE OUTPUT METHOD FOR A DISPLAY DEVICE WHICH OUTPUTS THREE-DIMENSIONAL CONTENTS, AND A DISPLAY DEVICE EMPLOYING THE METHOD**

(30) Priority: 09.07.2009 US 224434 P
(71) Applicant: LG Electronics Inc., Seoul 150-721 (KR)
(72) Inventor: OH, Seung Kyun, Seoul 137-724 (KR); CHOI, Seung Jong, Seoul 137-724 (KR); IM, Jin Seok, Seoul 137-724 (KR)
(74) Representative: Cabinet Plasseraud
(86) International application number: PCT/KR2010/004485
(87) International publication number: WO 2011/005056

(57) **Abstract**

The present invention relates to an image output method for a display device which outputs three-dimensional contents, and to a display device employing the method, and more specifically, relates to: an image output method for a display device, wherein a judgment is made as to whether an image signal contains three-dimensional image data, the image signal is then subjected to image processing in accordance with whether or not it contains three-dimensional image data, and any three-dimensional image data contained in the image signal is output in 3D format; and to a display device employing the method.

## Description

### Field of the Invention

The present invention relates to an image output method for a display device which outputs three-dimensional content, and a display device employing the method and, more particularly, to an image output method of a display device, which outputs 3D image data included in the video signal in 3D format, by determining whether or not an image signal includes three-dimensional (3D) image data, and by performing video-processing on the video signal depending upon whether or not the 3D image data is included in the video signal.

### Background Art

The current broadcasting environment is rapidly shifting from analog broadcasting to digital broadcasting. With such transition, contents for digital broadcasting are increasing in number as opposed to contents for the conventional analog broadcasting, and the types of digital broadcasting contents are also becoming more diverse. Most particularly, the broadcasting industry has become more interested in 3-dimensional (3D) contents, which provide a better sense of reality and 3D effect as compared to 2-dimensional (2D) contents. And, therefore, a larger number of 3D contents are being produced. Also, with the evolution of the technology, the display device is capable of outputting a larger number of video signals on a wide display screen. Herein, 3D images may also be included among the video signals being outputted to a single screen.

However, when a 3D image is included in a portion (or partial region) of a video signal, the 3D image is required to be outputted in an output format that is different from that of a 2D image. The related art display device is disadvantageous in that the display device is incapable of performing differentiated output processing on such video signals.

More specifically, according to the related art display device, when a 3D image is included in a partial region of a video signal, due to the absence of a method for processing such 3D images, or by applying the same video processing method used for processing 2-dimensional (2D) contents on 3D contents, the user may be incapable of viewing the 3D contents.

Therefore, in order to resolve such problems occurring in the related art device, an image outputting method of a display device and a display device applying such image outputting method, which enables the user to conveniently view and use the 3D image data included in the video signal, by performing video-processing on the 3D image data included in the video signal that is to be outputted, and by providing the video-processed image data in a 3D format, are required to be developed.

### Detailed Description of the Invention

### Technical Objects

In order to resolve the disadvantages of the related art, an object of the present invention is to provide an image outputting method of a display device and a display device applying such image outputting method, which enables the user to conveniently view and use the 3D image data included in the video signal, by performing video-processing on the 3D image data included in the video signal that is to be outputted, and by providing the video-processed image data in a 3D format,.

### Technical Solutions

According to an embodiment of the present invention, a method for outputting an image of the 3D display device includes the steps of, when 3D image data are included in a video signal that is to be outputted, determining a region of the 3D image data and a format of the 3D image data from the video signal; and outputting the 3D image data included in the determined region in a 3D format.

According to another embodiment of the present invention, the method for outputting an image of the 3D display device includes the steps of determining whether or not 3D image data are included in a video signal that is to be outputted; determining a region of the 3D image data within the video signal, by using information on a position of the 3D image data included in the video signal; and outputting the 3D image data included in the determined region in a 3D format by using information on a format of the 3D image data included in the video signal.

According to yet another embodiment of the present invention, a 3D display device includes a video signal information analyzer configured to determine a region of the 3D image data and a format of the 3D image data from the video signal, when 3D image data are included in a video signal that is to be outputted; and an output formatter configured to output the 3D image data included in the determined region in a 3D format.

According to a further embodiment of the present invention, a 3D display device includes a video signal information analyzer configured to determine whether or not 3D image data are included in a video signal that is to be outputted and to determine a region of the 3D image data within the video signal, by using information on a position of the 3D image data included in the video signal; and an output formatter configured to output the 3D image data included in the determined region in a 3D format by using information on a format of the 3D image data included in the video signal.

### Effects of the Invention

By performing video-processing on 3D image data included in a portion of a video signal that is to be outputted, the user may be capable of conveniently viewing and using the 3D image data included in the video signal.

Also, when the video signal that is to be outputted includes 3D image data in a portion of the video signal as an ultra high definition image, the present invention may output the 3D image data, which are included as a portion of the image, in a 3D format.

Additionally, by controlling the output of a backlight unit corresponding to the 3D image data region, within the video signal that is to be outputted, so as to increase the output luminance (or brightness), the present invention may provide the 3D image data, which are included in a portion of the video signal that is to be outputted, at a high luminance.

Furthermore, when it is determined that the 3D image data are included in the video signal, and when the 3D image data are provided from the display device by using a passive type shutter glasses method or an active type shutter glasses method, by controlling the output of the backlight unit, the present invention may resolve the problem of having the luminance reduced due to the degradation in the resolution of the display screen.

### Brief Description of the Drawings

Fig. 1 illustrates a display device providing 3D contents according to an embodiment of the present invention.

Fig. 2 illustrates an example showing a perspective based upon a distance or parallax between left image data and right image data.

Fig. 3 illustrates a flow chart showing the process steps for processing the output of a video signal, when 3D image data are included in a video signal that is to be outputted according to the present invention.

Fig. 4 illustrates an example of 3D image data being included in a portion of the video signal according to an exemplary embodiment of the present invention.

Fig. 5 illustrates an exemplary format of the 3D image data that may be included in a portion of the video signal according to the present invention.

Fig. 7 illustrates a signal that is being transmitted through an HDMI according to the present invention.

Fig. 8 illustrates a header structure of a Data Island packet according to an exemplary embodiment of the present invention.

Fig. 9 illustrates a table showing a definition of a Paket Type based upon a Paket Type Value according to the present invention.

Fig. 10 illustrates exemplary header structure and contents structure of a Vendor Specific InfoFrame packet according to an embodiment of the present invention.

Fig. 11 illustrates an example of outputting a video signal including 3D image data in a portion of the video signal according to an embodiment of the present invention.

Fig. 12 illustrates an example of outputting a video signal including 3D image data in a portion of the video signal according to another embodiment of the present invention.

Fig. 13 illustrates an example structure of a pair of shutter glasses according to an exemplary embodiment of the present invention.

### Best Mode for Carrying Out the Present Invention

Reference will now be made in detail to the preferred embodiments of the present invention, examples of which are illustrated in the accompanying drawings. Wherever possible, the same reference numbers will be used throughout the drawings to refer to the same or like parts.

In addition, although the terms used in the present invention are selected from generally known and used terms, the terms used herein may be varied or modified in accordance with the intentions or practice of anyone skilled in the art, or along with the advent of a new technology. Alternatively, in some particular cases, some of the terms mentioned in the description of the present invention may be selected by the applicant at his or her discretion, the detailed meanings of which are described in relevant parts of the description herein. Furthermore, it is required that the present invention is understood, not simply by the actual terms used but by the meaning of each term lying within.

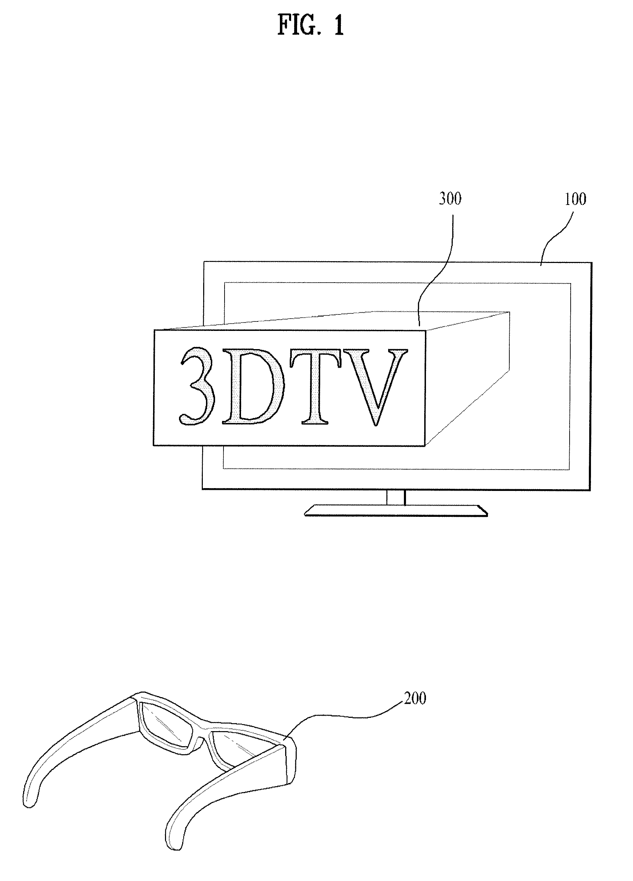

Fig. 1 illustrates a display device providing 3D contents according to an embodiment of the present invention.

According to the present invention, a method of showing 3D contents may be categorized as a method requiring glasses and a method not requiring glasses (or a naked-eye method). The method requiring glasses may then be categorized as a passive method and an active method. The passive method corresponds to a method of differentiating a left-eye image and a right-eye image using a polarized filter. Alternatively, a method of viewing a 3D image by wearing glasses configured of a blue lens on one side and a red lens on the other side may also correspond to the passive method. The active method corresponds to a method of differentiating left-eye and right-eye views by using liquid crystal shutter glasses, wherein a left-eye image and a right-eye image are differentiated by sequentially covering the left eye and the right eye at a predetermined time interval. More specifically, the active method corresponds to periodically repeating a time-divided (or time split) image and viewing the image while wearing a pair of glasses equipped with an electronic shutter synchronized with the cycle period of the repeated time-divided image. The active method may also be referred to as a time split type (or method) or a shutter glasses type (or method). The most commonly known method, which does not require the use of 3D vision glasses, may include a lenticular lens type and a parallax barrier type. More specifically, in the lenticular lens type 3D vision, a lenticular lens plate having cylindrical lens arrays perpendicularly aligned thereon is installed at a fore-end portion of an image panel. And, in the parallax barrier type 3D vision, a barrier layer having periodic slits is equipped on an image panel.

Among the many 3D display methods, Fig. 1 illustrates an example of an active method of the stereoscopic display method. However, although shutter glasses are given as an exemplary means of the active method according to the present invention, the present invention will not be limited only to the example given herein. Therefore, it will be apparent that other means for 3D vision can be applied to the present invention.

Referring to Fig. 1, the display device according to the embodiment of the present invention outputs 3D image data from a display unit. And, a synchronization signal (Vsync) respective to the 3D image data is generated so that synchronization can occur when viewing the outputted 3D image data by using a pair of shutter glasses (200). Then, the Vsync signal is outputted to an IR emitter (not shown) within the shutter glasses, so that a synchronized display can be provided to the viewer (or user) through the shutter glasses.

By adjusting an opening cycle of a left eye liquid crystal display panel and a right eye liquid crystal display panel in accordance with the synchronization signal (Vsyne), which is received after passing through the IR emitter (not shown), the shutter glasses (200) may be synchronized with the 3D image data (300) being outputted from the display device (100).

At this point, the display device processes the 3D image data by using the principles of the stereoscopic method. More specifically, according to the principles of the stereoscopic method, left image data and right image data are generated by filming an object using two cameras each positioned at a different location. Then, when each of the generated image data are orthogonally separated and inputted to the left eye and the right eye, respectively, the human brain combines the image data respectively inputted to the left eye and the right eye, thereby creating the 3D image. When image data are aligned so as to orthogonally cross one another, this indicates that the generated image data do not interfere with one another.

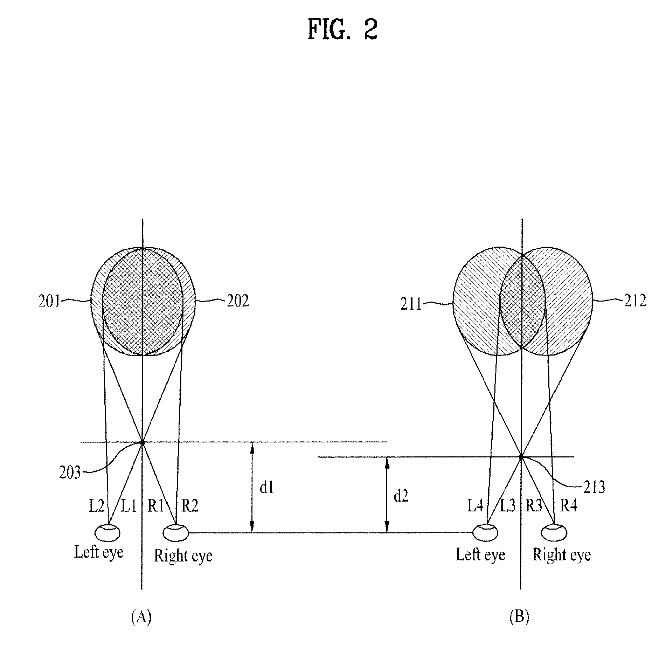

Fig. 2 illustrates an example showing a perspective based upon a distance or parallax between left image data and right image data.

Herein, Fig. 2(a) shows an image position (203) of the image created by combining both image data, when a distance between the left image data (201) and the right image data (202) is small. And, Fig. 2(b) shows an image position (213) of the image created by combining both image data, when a distance between the left image data (211) and the right image data (212) is large.

More specifically, Fig. 2(a) and Fig. 2(b) show different degrees of perspective of the images that are formed at different positions, based upon the distance between the left eye image data and the right eye image data, in an image signal processing device.

Referring to Fig. 2(a), when drawing extension lines (R1, R2) by looking at one side of the right image data (201) and the other side of the right image data (201) from the right eye, and when drawing extension lines (L1, L2) by looking at one side of the left image data (202) and the other side of the left image data (202) from the left eye, the image is formed at a crossing point (203) between the extension line (R1) of the right image data and the extension line (L1) of the left image occurring at a predetermined distance (d1) between the right eye and the left eye.

Referring to Fig. 2(b), when the extension lines are drawn as described in Fig. 2(a), the image is formed at a crossing point (213) between the extension line (R3) of the right image data and the extension line (L3) of the left image occurring at a predetermined distance (d2) between the right eye and the left eye.

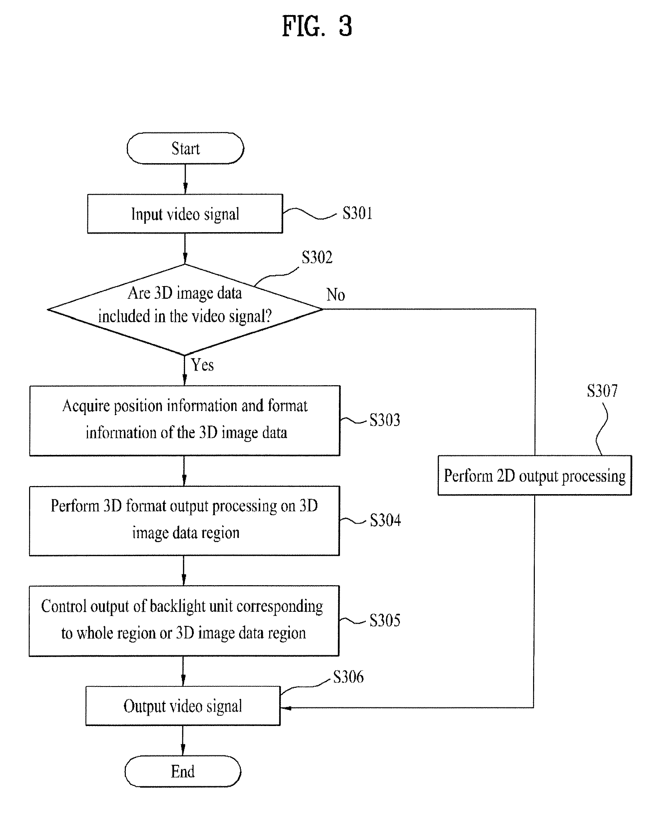

Herein, when comparing d1 of Fig. 2(a) with d2 of Fig. 2(b), indicating the distance between the left and right eyes and the positions (203, 213) where the images are formed, d1 is located further away from the left and right eyes that d2. More specifically, the image of Fig. 2(a) is formed at a position located further away from the left and right eyes than the image of Fig. 3(b).

This results from the distance between the right image data and the left image data (along east-to-west direction referring to Fig. 2).

For example, the distance between the right image data (201) and the left image data (202) of Fig. 2(a) is relatively narrower than the distance between the right image data (203) and the left image data (204) of Fig. 2(b).

Therefore, based upon Fig. 2(a) and Fig. 2(b), as the distance between the left image data and the right image data becomes narrower, the image formed by the combination of the left image data and the right image data may seem to be formed further away from the eyes of the viewer.

Meanwhile, the 3D image data may be realized in a 3D format by applying (or providing) a tilt or depth effect or by applying (or providing) a 3D effect on the 3D image data. Hereinafter, among the above-described methods, a method of providing a depth to the 3D image data will be briefly described.

Fig. 3 illustrates a flow chart showing the process steps for processing the output of a video signal, when 3D image data are included in a video signal that is to be outputted, according to the present invention.

According to the present invention, a video signal that is to be outputted may be directly provided to a display device through a broadcasting station, or may be provided to a display device from a source device.

A source device may correspond to any type of device that can provide 3D images, such as personal computers (PCs), camcorders, digital cameras, DVD (Digital Video Disc) devices (e.g., DVD players, DVD recorders, etc.), settop boxes, digital TVs, and so on. Also, the digital display device according to the present invention may also include all types of devices that is equipped with a display function, such as digital TVs, monitors, and so on. The source device and the display device may transmit and receive video signals and control signals by using a digital interface.

Herein, the digital interface may correspond to a Digital Visual Interface (DVI), a High Definition Multimedia Interface (HDMI), and so on.

Referring to Fig. 3, when a video signal that is to be outputted is inputted in step (S301), the display device according to an exemplary embodiment of the present invention determines, in step (S302), whether or not 3D image data are included in the video signal.

For example, when the video signal is received through the HDMI, the display device may use a Vendor Specific InfoFrame packet, which is included in the video signal, so as to determine whether or not 3D image data are included in the video signal.

Also, according to the embodiment of the present invention, when the user selects a 3D output mode from the display device, it may be determined that the 3D image data are included in the video signal.

Additionally, according to the embodiment of the present invention, when a video analyzer is included in the display device, the video analyzer may analyze the video signal, so as to determine whether or not 3D image data are included in the video signal.

Based upon the determined result of step (S302), when it is determined that 3D image data are not included in the video signal, the display device processes the video signal with 2D output processing in step (S307). And, then, in step (S306), the processed video signal is outputted to a display unit in a 2D format.

Alternatively, based upon the determined result of step (S302), when it is determined that 3D image data are included in the video signal, the display device acquires (or receives) position information of the 3D image data within the video signal, in step (S303), so as to determine the region corresponding to the 3D image data within the video signal.

At this point, according to the embodiment of the present invention, the video signal may include information on whether or not the video signal includes 3D image data, information on a position of the 3D image data, and information on a format of the 3D image data. And, the display device extracts the corresponding information from the video signal, so as to acquire the information on the position of the 3D image data, so as to determine the 3D image data region within the video signal, thereby being capable of determining the format of the 3D image data.

For example, when the video signal corresponds to a signal being transmitted through the HDMI, the display device may use a reserved field value within the Vendor Specific InfoFrame packet contents included in the video signal, so as to acquire information on whether or not 3D image data are included in the video signal and information on the position of the 3D image device.

Also, according to the embodiment of the present invention, the display device may receive information on the position of the 3D image data and information on the format of the 3D image data within the video signal from the user through a predetermined user interface.

Furthermore, according to the embodiment of the present invention, the display device may also acquire (or receive) information on the 3D image data region and information on the format of the 3D image data within the video signal through a video signal analyzer.

For example, by analyzing the pattern of the video signal, or by detecting am edge of a video signal, so as to determine left image data and right image data, which are included in the 3D image data, the video signal analyzer may acquire information on the position of the 3D image data and information on the format of the 3D image data within the video signal.

In step (S304), the display device uses the information on the position of the 3D image data and the information on the format of the 3D image data within the video signal, so as to process and output the 3D image data region within the video signal in a 3D format, thereby outputting the processed 3D image data to a display unit.

For example, among 1^{st} to 4^{th} regions (or regions 1 to 4) of the video signal, when it is determined that line by line format 3D image data are included in the 4^{th} region (region 4), the display device may use the left image data and the right image data included in the 3D image data of the 4^{th} region, so as to output the corresponding 3D image data in a 3D format. And, then, the display device may output the video signals of the remaining 1^{st} to 3^{rd} regions (regions 1 to 3) in a 2D format.

At this point, the display device may use the determined format information of the 3D image data, so as to output the 3D image data in at least one of the line by line method, the frame sequential method, and the checkerboard method.

Also, whenever required, the format of the 3D image data may be converted (or changed) depending upon the output method of the display device, and, then, the 3D image data may be outputted in the converted method.

For example, in case the method of the display device for providing the 3D image data corresponds to the passive shutter glasses method, the output image may be converted to the line by line method, and, in case of the active shutter glasses method, the output image may be converted to the frame sequential method, thereby being outputted.

Furthermore, when it is determined that 3D image data are included in the video signal, the display device according to the exemplary embodiment of the present invention may increase the brightness of the backlight unit, which either corresponds to the whole region of the video signal, or corresponds to a region of the video signal in which the 3D image data are included, in step (S305), so as to enhance the luminance.

At this point, when it is determined that 3D image data are included in the video signal according to the exemplary embodiment of the present invention, and when the performance of the operations of the passive type or active type shutter glasses is detected, so as to allow the user to operate the passive type or active type shutter glasses, the display device according to the exemplary embodiment of the present invention may increase the brightness of the backlight unit, which either corresponds to the whole region of the video signal, or corresponds to a region of the video signal in which the 3D image data are included, in step (S305), so as to enhance the output luminance.

Therefore, by controlling the brightness of the backlight unit, when 3D image data are included in the video signal, or when the shutter glasses are being activated (or operated), as high luminance video signals are being provided, an efficient power management may be performed.

Whether or not the shutter glasses are being operated may be determined by a glass operation sensor, which is included in the display device. Herein, when the power of the passive type or active type shutter glasses is turned on, and when a control signal or response signal is received to the display device, or when a user input is detected by a sensor included in the shutter glasses, and when sensing information is received from the shutter glasses, it may be determined that the shutter glasses are being operated.

When the user operates (or activates) the passive type shutter glasses, by increasing the brightness of the backlight unit corresponding to the whole region of the video signal, so as to enhance the output luminance, the present invention may provide the video signal at a high luminance, when the display device provides the 3D image data by using the passive method.

Also, when the user operates (or activates) the active type shutter glasses, by increasing the brightness of the backlight unit corresponding to the region including the 3D image data within the video signal, so as to enhance the output luminance, the present invention may resolve the problem of degradation in the luminance of the 3D image data, when the active type shutter glasses are being operated.

In step (S306), the display device outputs the video signal to the display unit.

Therefore, by video-processing the 3D image data included in a portion (or region) of the video signal, and by providing the video-processed 3D image data in a 3D format, the present invention may enable the user to conveniently view and use the 3D image data included in the video signal.

Most particularly, when the video signal that is to be outputted includes 3D image data in a region of the video signal as an ultra high definition image, the 3D image data included in a partial region of the video signal may be outputted in a 3D format.

Also, by controlling the output of the backlight unit corresponding to the 3D image data region of the video signal that is to be outputted, so as to increase the output luminance, the present invention may provide the 3D image data included in the partial region of the video signal at a high luminance.

Most particularly, when the 3D image data are provided from the display device by using a passive type shutter glasses method or an active type shutter glasses method, by controlling the output of the backlight unit, the present invention may resolve the problem of having the luminance reduced due to the degradation in the resolution of the display screen.

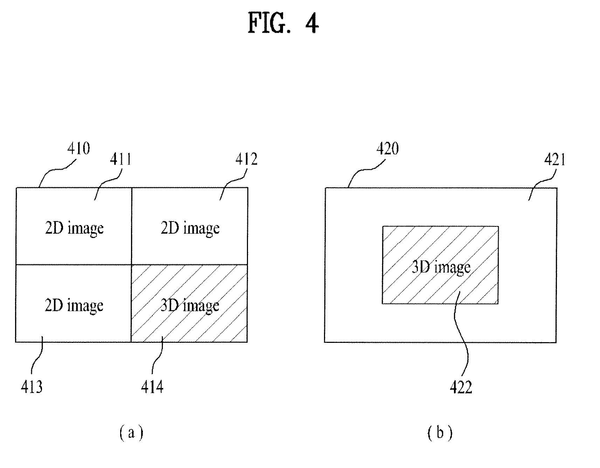

Fig. 4 illustrates an example of 3D image data being included in a portion of the video signal according to an exemplary embodiment of the present invention.

Referring to Fig. 4(a), the video signal (410) may include a 1^{st} region (or region 1) (411), a 2^{nd} region (or region 2) (412), a 3^{rd} region (or region 3) (413), and a 4^{th} region (or region 4) (414). Herein, 1^{st} to 3^{rd} regions (or regions 1 to 3) (411, 412, 413) may be configured of 2D image data, and 4^{th} region (or region 4) (414) may include 3D image data.

In this case, the display device of the present invention may acquire information on the position of the 3D image data within the video signal, so as to determine the 4^{th} region (414) of the 3D image data included in the video signal. And, after determining the format of the 3D image data, the 4^{th} region (414) is outputted in a 3D format.

At this point, as described above, by increasing the brightness of the backlight unit corresponding to the 4^{th} region (414), the luminance of the 3D image data may be increased.

Also, referring to Fig. 4(b), the video signal (420) may include 2D image data in the 1^{st} region (421), i. e., in the entire screen, and 3D image data may be included in the 2^{nd} region (422).

In this case, also, as described above, the display device according to the present invention the display device may acquire information on the position of the 3D image data within the video signal, so as to determine the 2^{nd} region (422) of the 3D image data included in the video signal. And, after determining the format of the 3D image data, the 3D image data of the 2^{nd} region (422) is outputted in a 3D format having a predetermined depth value.

At this point, as described above, by increasing the brightness of the backlight unit corresponding to the 2^{nd} region (422), the luminance of the 3D image data may be increased.

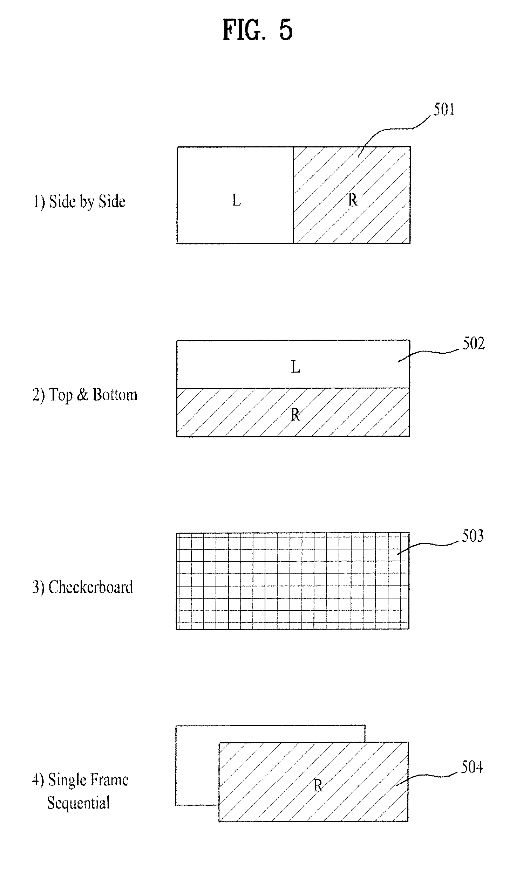

Fig. 5 illustrates exemplary formats of 3D image data that may be included in a portion of a video signal according to the present invention.

Referring to Fig. 5, 3D image data may correspond to at least one or more of (1) a side-by-side format (501), wherein a single object is filmed by two different cameras from different locations, so as to create left image data and right image data, and wherein each of the created left and right images is separately inputted (or transmitted) to the left eye and the right eye, so that the two images can be orthogonally polarized, (2) a top and bottom type (502), wherein a single object is filmed by two different cameras from different locations, so as to create left image data and right image data, and wherein each of the created left and right images is inputted from top to bottom, (3) a checker board format (503), wherein a single object is filmed by two different cameras from different locations, so as to create left image data and right image data, and wherein each of the created left and right images is alternately inputted in a checker board configuration, (3) a Frame sequential format (504), wherein a single object is filmed by two different cameras from different locations, so as to create left image data and right image data, and wherein each of the created left and right images is inputted with a predetermined time interval. Thereafter, the left image data and the right image data, which are inputted in accordance with the above-described formats, may be combined in the viewer's brain so as to be viewed as a 3D image.

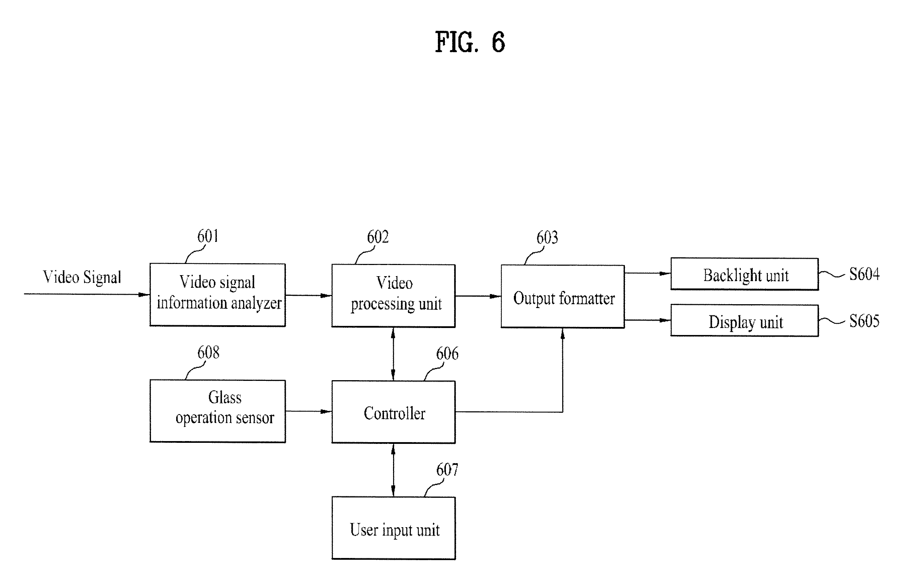

Fig. 6 illustrates a block view showing the structure for output-processing a video signal including 3D image data in a partial region of the video signal according to an exemplary embodiment of the present invention.

Referring to Fig. 6, the display device according to the embodiment of the present invention may include a video signal analyzer (601), a video processing unit (602), an output formatter (603), a backlight unit (604), a display unit (605), a glass operation sensor (608), a controller (606), and a user input unit (607).

The video signal information analyzer (601) determines whether or not 3D image data are included in the video signal that is to be outputted. Then, when it is determined that the 3D image data are included in the video signal that is to be outputted, the video signal information analyzer (601) determines the region of the 3D image data within the video signal and the format of the 3D image data.

At this point, by using the information on the position of the 3D image data included in the video signal, the video signal information analyzer (601) may determine the 3D image data region within the video signal.

According to the embodiment of the present invention, the video signal information analyzer (601) may determine whether or not the 3D image data are included in the video signal by using an HDMI_Video_Format field value within the contents of a Vendor Specific InfoFrame packet, which is included in the video signal.

Also, when the user selects a 3D output mode, the video signal information analyzer (601) according to the embodiment of the present invention may determine that the 3D image data are included in the video signal.

Additionally, the video signal information analyzer (601) according to the embodiment of the present invention may include a video analyzer. And, the video analyzer may analyze the video signal, so as to determine whether or not the video signal includes 3D image data.

Also, according to the embodiment of the present invention, the video signal analyzer (601) may analyze the video signal, so as to determine the 3D image data region and the format of the 3D image data.

At this point, the video signal analyzer (601) may use the information on the position of the 3D image data region, which is included in the video signal that is to be outputted. Thus, the video signal analyzer (601) may determine the 3D image data region existing in the video signal.

For example, the video signal analyzer (601) may use a reserved field value within the Vendor Specific InfoFrame packet contents included in the video signal, so as to determine the 3D image data region or to determine the format of the 3D image data.

The video processing unit (602) performs video-processing on the inputted video signal in accordance with a panel of the display unit and in accordance with the user settings. At this point, the video processing unit (602) may perform an image-processing procedure for enhancing picture quality, by controlling sharpness, noise level, luminance level, and so on, of the 3D image data region.

The output formatter (603) outputs the 3D image data included in the 3D image data region in a 3D format.

At this point, the output formatter (603) may use the format of the 3D image data, which is determined by the video signal information analyzer (601), so as to output the 3D image data in a 3D format.

Also, according to an exemplary embodiment of the present invention, the output formatter (603) may use the format information of the 3D image data included in the video signal, so as to output the 3D image data included in the determined region in a 3D format having a predetermined depth value.

According to the embodiment of the present invention, the output formatter (603) may include a scaler configured to scale a video signal to match an output size of the display unit, an FRC configured to control a frame rate of the video signal to match an output frame rate of the display device, and a 3D format converter configured to output 3D image data to match the output format of the display device.

When the 3D image data are provided from the display device by using the passive shutter glasses method, the output formatter (603) may convert the output image to a line by line format and may output the converted output image to the display unit (605). Alternatively, when the 3D image data are provided from the display device by using the active shutter glasses method, the output formatter (603) may convert the output image to a frame sequential format and may output the converted output image to the display unit (605).

When the display device adopts the active type shutter glasses method, the output formatter (603) may generate a synchronization signal (Vsync) related to the 3D image data, which is configured to be synchronized as described above. Thereafter, the output formatter (119) may output the generated synchronization signal to an IR emitter (not shown), which is included in the shutter glasses, so as to enable the user to view the 3D image being displayed with matching display synchronization through the shutter glasses.

The controller (606) controls the overall functions of the display device and, most particularly, controls the brightness of the backlight unit (604) corresponding to a 3D image data region, which is determined by the video signal information analyzer (601).

The glass operation sensor (608) senses the operation of the shutter glasses through which the 3D image data are being inputted. Then, when the operation of the shutter glasses is sensed, the controller (606) controls the brightness of a backlight unit corresponding to the determined (3D image data) region, or the controller (606) controls the brightness of a backlight unit corresponding to the whole region of the video signal.

When the power of passive type shutter glasses or active type shutter glasses is turned on, and when a control signal or a response signal is received by the display device, or when a user input is detected (or sensed) by a sensor included in the shutter glasses, and when sensing information is received from the shutter glasses, the glass operation sensor (608) may determine that the shutter glasses are being operated.

The user input unit (607) may receive the user input, and a region and format of the 3D image data included in the video signal may be selected from the user input unit (607).

The display unit (605) outputs a video signal including the 3D image data in a region of the video signal.

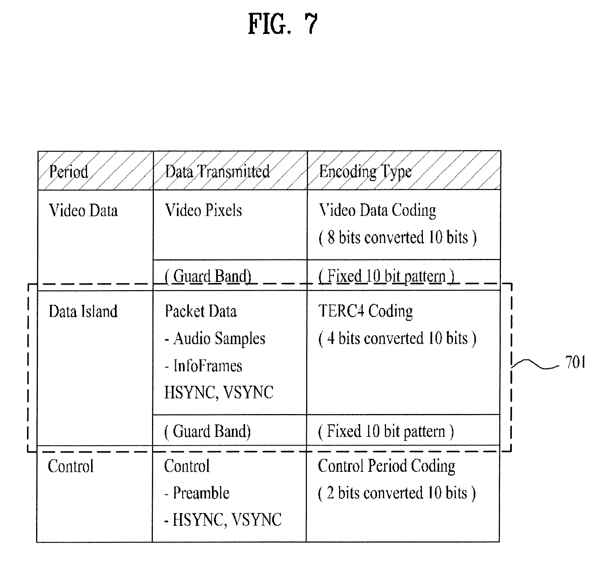

Fig. 7 illustrates a signal that is being transmitted through an HDMI according to the present invention. Referring to Fig. 7, the signal that is being transmitted through the HDMI may be categorized as control data, data island period, and video data period for each section depending upon the contents of the corresponding signal.

The display device verifies packet type information included the header of the data island period packet, so as to search for the Vendor Specific InfoFrame packet. Thereafter, the display device may use the searched Vendor Specific InfoFrame packet so as to determine whether information on the resolution of the video signal is included or whether or not 3D image data are included.

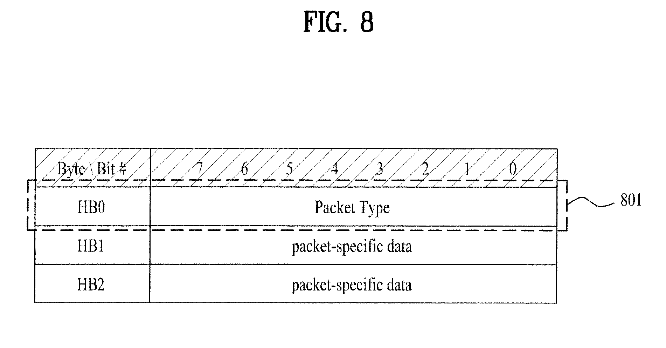

Fig. 8 illustrates a header structure of a Data Island packet according to an exemplary embodiment of the present invention, wherein the header structure is configured of 3 bytes. Among the 3 bytes, a first byte (HB0, 801) may indicate a packet type.

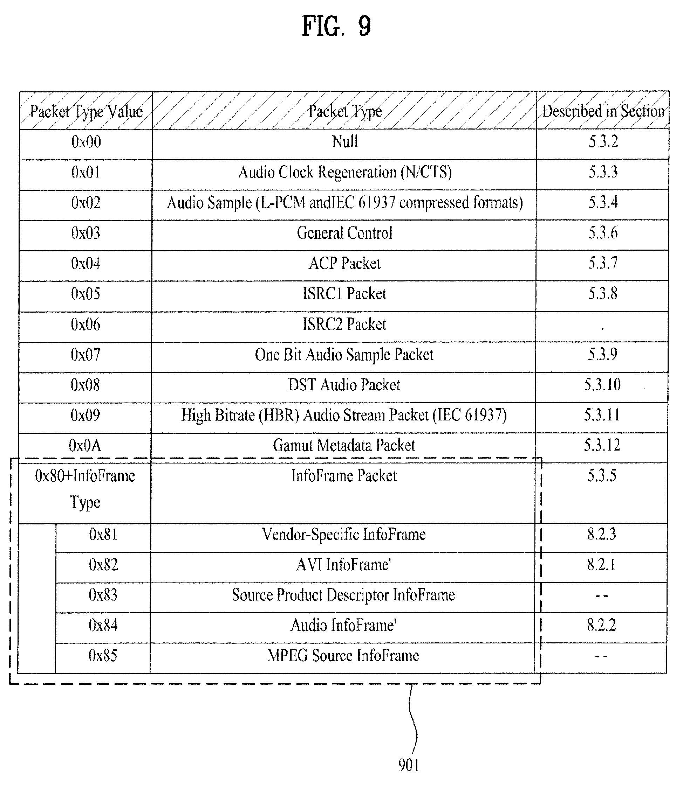

Fig. 9 illustrates a table showing a definition of a Paket Type based upon a Paket Type Value according to the present invention. Referring to Fig. 9, a first byte (HBO) within the header of the Vendor Specific InfoFrame packet may be indicated as having a packet type value of 0x81.

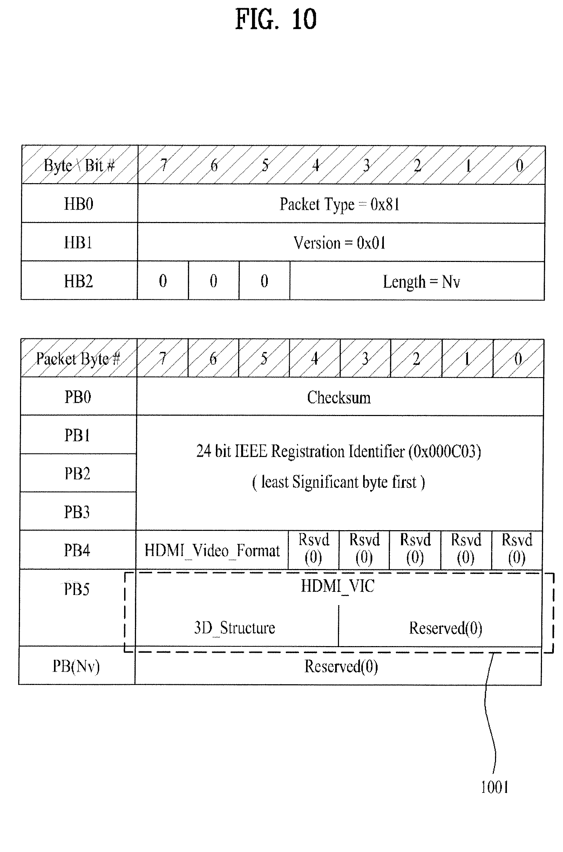

Fig. 10 illustrates exemplary header structure and contents structure of a Vendor Specific InfoFrame packet according to an embodiment of the present invention.

Referring to Fig. 10, the header of the Vendor Specific InfoFrame packet may be configured of 3 bytes, wherein a first byte (HB0) may be indicated as having a packet type value of 0x81, wherein a second byte (HB1) indicates version information, and wherein the lower 5 bits of a third byte (HB2) indicates the contents length of the Vendor Specific InfoFrame packet.

Additionally, an HDMI_Video_Format is allocated to a fifth byte (PB4) of the contents of the Vendor Specific InfoFrame packet. The display device according to the present invention may use the HDMI_Video Format field value or may use a reserved field value of a 6^{th} byte (PB5) of the packet contents, so as to identify whether or not 3D image data are included in the video signal.

Furthermore, the value of upper 4 bits of the 6^{th} byte (PB5) of the Vendor Specific InfoFrame packet contents may correspond to a 3D_Structure field, and the 3D_Structure field may define the format of 3D image data. For example, when the 3D_Structure field value is equal to 0000, this may indicate that the corresponding 3D image corresponds to a frame packing format.

Similarly, when the 3D_Structure field value is equal to 0001, this may indicate that the corresponding 3D image corresponds to a field alternative format, when the 3D_Structure field value is equal to 0010, this may indicate that the corresponding 3D image corresponds to a line alternative format, when the 3D_Structure field value is equal to 0011, this may indicate that the corresponding 3D image corresponds to a side by side (full) format, when the 3D_Structure field value is equal to 0100, this may indicate that the corresponding 3D image corresponds to a L+depth format, when the 3D_Structure field value is equal to 0101, this may indicate that the corresponding 3D image corresponds to a L+depth+graphics+graphics-depth format, and when the 3D_Structure field value is equal to 1000, this may indicate that the corresponding 3D image corresponds to a side by side (half) format.

The side by side format respectively performs 1/2 sub-sampling on a left image and a right image along a horizontal direction. Then, the sampled left image is positioned on the left side, and the sampled right image is positioned on the right side, so as to configure a stereoscopic image. The frame packing format may also be referred to as a top and bottom format, wherein 1/2 sub-sampling is respectively performed on a left image and a right image along a vertical direction, and wherein the sampled left image is positioned on the upper (or top) side, and the sampled right image is positioned on the lower (or bottom) side, so as to configure a stereoscopic image. The L+depth format corresponds to a case of transmitting any one of a left image and a right image along with depth information for creating another image.

Also, the value of a reserved field of the 6^{th} byte (PB5) of the Vendor Specific InfoFrame packet contents may include information of the position of the 3D image data within the video signal.

For example, the value of the reserved field of the 6^{th} byte (PB5) of the Vendor Specific InfoFrame packet contents may include information indicating that the video signal is configured of 4 1920x1080 video signals, information indicating whether or not each of the video signals includes 3D image data, and information on the position of the 3D image data (e.g., H_position information or V_position information), when the 3D image data are included in each video signal.

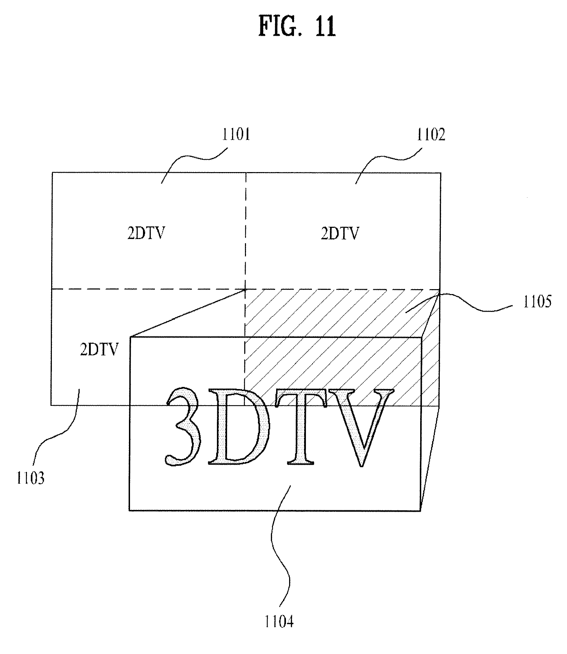

Fig. 11 illustrates an example of outputting a video signal including 3D image data in a portion of the video signal according to an embodiment of the present invention.

The video signal may include a 1^{st} region (or region 1) (1101), a 2^{nd} region (or region 2) (1102), a 3^{rd} region (or region 3) (1103), and a 4^{th} region (or region 4) (1104). Herein, 1^{st} to 3^{rd} regions (or regions 1 to 3) (1101, 1102, 1103) may be configured of 3D image data, and 4^{th} region (or region 4) (1104) may include 3D image data.

In this case, the display device of the present invention may acquire information on the position of the 3D image data within the video signal, so as to determine the 4^{th} region (1104) of the 3D image data included in the video signal. And, after determining the format of the 3D image data, the 4^{th} region (1104) is outputted in a 3D format.

At this point, as described above, by increasing the brightness of the backlight unit (1105) corresponding to the 4^{th} region (1104), the luminance of the 3D image data may be increased, or the brightness of the backlight unit corresponding to the whole region may be increased.

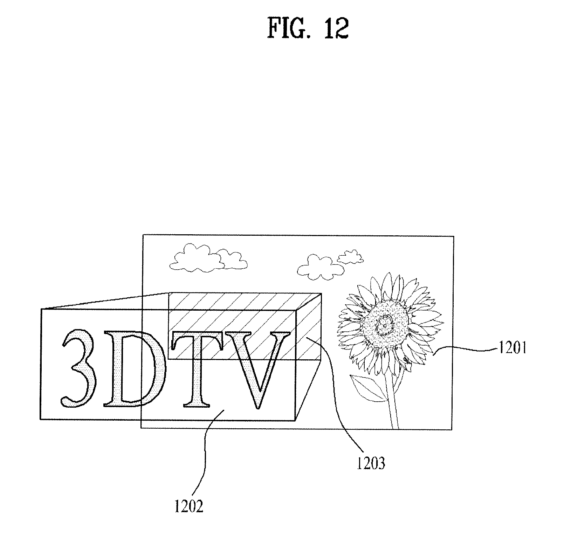

Fig. 12 illustrates an example of outputting a video signal including 3D image data in a portion of the video signal according to another embodiment of the present invention.

Also, referring to Fig. 12, the video signal may include 2D image data in the 1^{st} region (1201), *i.e.,* in the entire screen, and 3D image data may be included in the 2^{nd} region (1202).

In this case, also, as described above, the display device according to the present invention the display device may acquire information on the position of the 3D image data within the video signal, so as to determine the 2^{nd} region (1202) of the 3D image data included in the video signal. And, after determining the format of the 3D image data, the 3D image data of the 2^{nd} region (1202) is outputted in a 3D format.

At this point, as described above, by increasing the brightness of the backlight unit corresponding to the 2^{nd} region (1202), the luminance of the 3D image data may be increased.

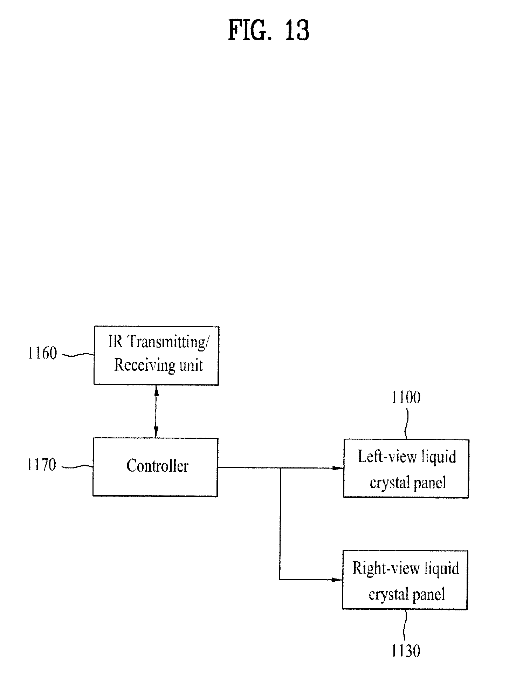

Fig. 13 illustrates an example structure of a pair of active type shutter glasses according to an exemplary embodiment of the present invention. Referring to Fig. 13, the shutter glasses are provided with a left-view liquid crystal panel (1100) and a right-view liquid crystal panel (1130). Herein, the shutter liquid crystal panels (1100, 1130) perform a function of simply allowing light to pass through or blocking the light in accordance with a source drive voltage. When left image data are displayed on the display device, the left-view shutter liquid crystal panel (1100) allows light to pass through and the right-view shutter liquid crystal panel (1130) blocks the light, thereby enabling only the left image data to be delivered to the left eye of the shutter glasses user. Meanwhile, when right image data are displayed on the display device, the left-view shutter liquid crystal panel (1100) blocks the light and the right-view shutter liquid crystal panel (1130) allows light to pass through, thereby enabling only the right image data to be delivered to the right eye of the shutter glasses user.

During this process, an infrared light ray receiver (1160) of the shutter glasses converts infrared signals received from the display device to electrical signals, which are then provided to the controller (1170). The controller (1170) controls the shutter glasses so that the left-view shutter liquid crystal panel (1100) and the right-view shutter liquid crystal panel (1130) can be alternately turned on and off in accordance with a synchronization reference signal.

As described above, depending upon the control singles received from the display device, the shutter glasses may either allow light to pass through or block the light passage through the left-view shutter liquid crystal panel (1100) or the right-view shutter liquid crystal panel (1130).

Furthermore, when the power of the shutter glasses is turned on, the infrared light ray receiver (1160) may transmit a control signal or a response signal to the display device. Alternatively, when a user input is sensed (or detected) by a sensor included in the shutter glasses, the infrared light ray receiver (1160) may transmit the sensed information to the display device. As described above, this may also be equally applied to passive type shutter glasses.

As described above, the detailed description of the preferred embodiments of the present invention, which is disclosed herein, is provided to enable anyone skilled in the art to realize and perform the embodiment of the present invention. Although the description of the present invention is described with reference to the preferred embodiments of the present invention, it will be apparent that anyone skilled in the art may be capable of diversely modifying and varying the present invention without deviating from the technical scope and spirit of the present invention. For example, anyone skilled in the art may use the elements disclosed in the above-described embodiments of the present invention by diversely combining each of the elements.

### Mode for Carrying Out the Present Invention

Diverse exemplary embodiments of the present invention have been described in accordance with the best mode for carrying out the present invention.

### Industrial Applicability

By outputting 3D image data included in a video signal in a 3D format, the present invention may enable the user to view the 3D image data included in a portion of the video signal.

## Claims

1. In method for outputting an image of a 3D display device, the method for outputting an image of the 3D display device comprising:
when 3D image data are included in a video signal that is to be outputted,
determining a region of the 3D image data and a format of the 3D image data from the video signal; and
outputting the 3D image data included in the determined region in a 3D format.

2. The method of claim 1, wherein the step of determining a region of the 3D image data and a format of the 3D image data from the video signal, when 3D image data are included in a video signal that is to be outputted, further comprises:
determining whether 3D image data are included in the video signal by using an HDMI_Video_format field value within Vendor Specific InfoFrame packet contents, which are included in the video signal.

3. The method of claim 1, wherein the step of determining a region of the 3D image data and a format of the 3D image data from the video signal, when 3D image data are included in a video signal that is to be outputted, comprises:
determining a region of the 3D image data within the video signal by using information on a position of a 3D image data region included in the video signal that is to be outputted.

4. The method of claim 3, wherein the step of determining a region of the 3D image data and a format of the 3D image data from the video signal, when 3D image data are included in a video signal that is to be outputted, comprises:
determining a region of the 3D image data or a format of the 3D image data by using a reserved field value within the Vendor Specific InfoFrame packet contents included in the video signal.

5. The method of claim 4, wherein, in the step of outputting the 3D image data included in the determined region in a 3D format, outputting the 3D image data in the 3D format by using a format of the determined 3D image data.

6. The method of claim 1, further comprising:
controlling a brightness of a backlight unit corresponding to a region of the 3D image data.

7. The method of claim 1, further comprising:
when operations of shutter glasses to which the 3D image data are being inputted are sensed, controlling a brightness of a backlight unit corresponding to the determined region, or controlling a brightness of a backlight unit corresponding to an entire region of the image signal.

8. The method of claim 1, wherein the step of determining a region of the 3D image data and a format of the 3D image data from the video signal, when 3D image data are included in a video signal that is to be outputted, comprises:
having a region of the 3D image data and a format of the 3D image data selected from the video signal.

9. The method of claim 1, wherein the step of determining a region of the 3D image data and a format of the 3D image data from the video signal, when 3D image data are included in a video signal that is to be outputted, comprises:
analyzing the video signal, so as to determine a region of the 3D image data and a format of the 3D image data.

10. In a method for outputting an image of a 3D display device, the method for outputting an image of the 3D display device comprising:
determining whether or not 3D image data are included in a video signal that is to be outputted;
determining a region of the 3D image data within the video signal, by using information on a position of the 3D image data included in the video signal; and
outputting the 3D image data included in the determined region in a 3D format by using information on a format of the 3D image data included in the video signal.

11. The method of claim 10, wherein the steps of determining a region of the 3D image data within the video signal, by using information on a position of the 3D image data included in the video signal; and
outputting the 3D image data included in the determined region in a 3D format by using information on a format of the 3D image data included in the video signal, comprises:
determining a region of the 3D image data or a format of the 3D image data by using a reserved field value within Vendor Specific InfoFrame packet contents included in the video signal.

12. The method of claim 10, further comprising:
controlling a brightness of a backlight unit corresponding to a region of the 3D image data.

13. The method of claim 10, further comprising:
when operations of shutter glasses to which the 3D image data are being inputted are detected, controlling a brightness of a backlight unit corresponding to the determined region, or controlling a brightness of a backlight unit corresponding to an entire region of the image signal.

14. In a 3D display device, the 3D display device comprising:
a video signal information analyzer configured to determine a region of the 3D image data and a format of the 3D image data from the video signal, when 3D image data are included in a video signal that is to be outputted; and
an output formatter configured to output the 3D image data included in the determined region in a 3D format.

15. The device of claim 14, wherein the video signal information analyzer determines whether 3D image data are included in the video signal by using an HDMI_Video_format field value within Vendor Specific InfoFrame packet contents, which are included in the video signal.

16. The device of claim 14, wherein the video signal information analyzer determines a region of the 3D image data within the video signal by using information on a position of a 3D image data region included in the video signal that is to be outputted.

17. The device of claim 16, wherein the video signal information analyzer determines a region of the 3D image data or a format of the 3D image data by using a reserved field value within the Vendor Specific InfoFrame packet contents included in the video signal.

18. The device of claim 17, wherein the output formatter outputs the 3D image data in the 3D format by using a format of the determined 3D image data.

19. The device of claim 14, further comprising:
a controller configured to control a brightness of a backlight unit corresponding to a region of the 3D image data.

20. The device of claim 14, further comprising:
a glass operation sensor configured to sense operations of shutter glasses to which the 3D image data are being inputted, and
wherein, when operations of the shutter glasses are sensed, the controller controls a brightness of a backlight unit corresponding to the determined region, or controls a brightness of a backlight unit corresponding to an entire region of the image signal.

21. The device of claim 14, further comprising:
a user input unit configured to have a region of the 3D image data and a format of the 3D image data selected from the video signal.

22. The device of claim 14, wherein the video signal information analyzer analyzes the video signal, so as to determine a region of the 3D image data and a format of the 3 D image data.

23. A 3D display device, comprising:
a video signal information analyzer configured to determine whether or not 3D image data are included in a video signal that is to be outputted and to determine a region of the 3D image data within the video signal, by using information on a position of the 3D image data included in the video signal; and
an output formatter configured to output the 3D image data included in the determined region in a 3D format by using information on a format of the 3D image data included in the video signal.

24. The device of claim 23, wherein the video signal information analyzer determines a region of the 3D image data or a format of the 3D image data by using a reserved field value within Vendor Specific InfoFrame packet contents included in the video signal.

25. The device of claim 23, further comprising:
a controller configured to control a brightness of a backlight unit corresponding to a region of the 3D image data.

26. The device of claim 23, wherein, when operations of shutter glasses to which the 3D image data are being inputted are detected, the controller controls a brightness of a backlight unit corresponding to the determined region, or controls a brightness of a backlight unit corresponding to an entire region of the image signal.
